# EUROPÄISCHE PATENTANMELDUNG

(11) **EP 2 676 838 A2**
(43) Veröffentlichungstag der Anmeldung: **25.12.2013**
(21) Anmeldenummer: 13001912.8
(22) Anmeldetag: 12.04.2013
(51) Int. Cl.: B60P 3/32, B60P 3/36

(54) **Kraftfahrzeug mit einem Innenausbau zur Ausbildung einer Wohn- und/oder Schlafgelegenheit**

(30) Priorität: 18.06.2012 DE 102012012092
(71) Anmelder: Degenhart, Ingo, 95447 Bayreuth (DE)
(72) Erfinder: Degenhart, Ingo, 95447 Bayreuth (DE)
(74) Vertreter: Zeitler - Volpert - Kandlbinder

(57) **Zusammenfassung**

Die Erfindung betrifft ein Kraftfahrzeug, insbesondere Hochdachkombi, mit einem Innenausbau zur Ausbildung einer Wohn- und Schlafgelegenheit, mit mindestens zwei Modulen (6, 13, 15, 18), die jeweils unter einer Auflagefläche ein Funktionsmodul mit Funktionskomponenten aufweisen, wobei die Auflageflächen eine im Wesentlichen identische Höhe aufweisen, so dass diese gemeinsam als Sitz- und/oder Schlafebene dienen, und wobei dieses zumindest einen Rücksitz (5) sowie eine Heckklappe (4) und wenigstens eine hintere Seitentür aufweist, wobei die Module (6, 13, 15, 18) und der zumindest eine Rücksitz (5) derart angeordnet sind, dass diese einen L-förmigen Durchgang von der Heckklappe (4) zur wenigstens einen hinteren Seitentür freilassen.

## Beschreibung

Die Erfindung betrifft ein Kraftfahrzeug mit einem Innenausbau zur Ausbildung einer Wohn- und/oder Schlafgelegenheit. Insbesondere betrifft die Erfindung den Umbau eines kleinen Nutzfahrzeuges, beispielsweise eines Kleinbusses, auf PKW-Basis zu einem Wohnmobil. Ein Vertreter dieser Fahrzeuggattung, die vielfach auch als Hochdachkombis bezeichnet wird, ist beispielsweise der Volkswagen® Caddy®, den es sowohl in einer Version mit kurzem Radstand als auch in einer Version mit langem Radstand (Namenszusatz: Maxi) gibt.

Hochdachkombis zeichnen sich regelmäßig dadurch aus, dass diese auf kleinen Außenabmessungen einen großen Innenraum bieten. Dieser ist durch die Kastenform, die die Aufbauten dieser Fahrzeuge regelmäßig aufweisen, sowie durch die fast immer verbaute seitliche Schiebetür und die große Heckklappe (alternativ auch Hecktüren) auch sehr gut zugänglich. Hochdachkombis werden regelmäßig als kostengünstige, gewerbliche Fahrzeuge konzipiert, so dass diese vielfach technisch weniger aufwendig als vergleichbare PKW sind. Diese gewerblichen Ausführungen weisen dann zwei Vordersitze auf, an die sich direkt die Ladefläche ohne weitere Sitzgelegenheiten anschließt. Dann kann auch vorgesehen sein, dass die Seiten der Karosserie im Bereich der Ladefläche ohne Fenster ausgeführt sind. Von den meisten Hochdachkombis werden aber auch PKW-Ausführungen angeboten, die mindestens eine Rückbank mit Sitzgelegenheiten aufweisen. Bei diesen Ausführungen sind dann auch Fenster in den Seitenflächen und in der Schiebetür vorgesehen. Die PKW-Ausführungen der Hochdachkombis sind als kostengünstige Familien- und Freizeitfahrzeuge beliebt.

Eine Besonderheit der Hochdachkombis ist deren Variabilität, die sich aus dem Aufbau mit der von einer großen, kastenförmigen Karosserie umgebenen Ladefläche ergibt. In den PKW-Ausführungen dieser Fahrzeuge werden die Rücksitze auf Stützen stehend auf der Ladefläche montiert. Diese Fahrzeuge haben üblicherweise zwei vordere Seitentüren, wenigstens eine, meist zwei hintere Seitentüren, welche häufig als Schiebetüren ausgebildet sind, sowie eine Heckklappe bzw. alternativ dazu auch Hecktüren. Durch einen Ein- bzw. Ausbau der Sitze bzw. Rückbank kann bei einem solchen Hochdachkombi schnell und einfach zwischen einer gewerblichen und einer privaten Nutzung gewechselt werden.

Wegen ihrer geringen Preise und der Variabilität stellen Hochdachkombis eine beliebte Basis da, um durch einen Innenausbaubereich der Ladefläche ein kleines Wohnmobil zu erhalten.

Ein Kraftfahrzeug mit den Merkmalen des Oberbegriffs des Patentanspruchs 1 ist aus dem Dokument DE 20 2004 011 970 U1 bekannt.

Ausgehend von diesem Stand der Technik lag der Erfindung die Aufgabe zu Grunde, einen Innenausbau für ein Kraftfahrzeug und insbesondere für einen Hochdachkombi zu schaffen, der sich durch eine hohe Funktionalität und Zugänglichkeit sowie eine möglichst optimale Raumausnutzung auszeichnet und gleichzeitig das Mitführen von wenigstens drei Personen ermöglicht.

Diese Aufgabe wird durch den Gegenstand des unabhängigen Patentanspruchs 1 gelöst. Vorteilhafte Ausgestaltungen des erfindungsgemäßen Kraftfahrzeugs sind Gegenstand der abhängigen Patentansprüche und ergeben sich aus der nachfolgenden Beschreibung der Erfindung.

Der Erfindung liegt der Gedanke zugrunde, die Zugänglichkeit und Raumausnutzung eines Innenausbaus zur Ausbildung einer Wohn- und Schlafgelegenheit in einem Kraftfahrzeug und insbesondere in einem Hochdachkombi dadurch möglichst optimal auszugestalten, dass einerseits die Funktionskomponenten, die regelmäßig zum Ausbau einer Wohn- und Schlafgelegenheit in einem Kraftfahrzeug eingesetzt werden, wie insbesondere eine Spüle, ein Herd, ein WC, eine Batterie oder eine Brennstoffzelle sowie eine Kühlbox funktional zu gruppieren und strukturell in Modulen integrieren, wobei die Module dann zusätzlich eine Doppelnutzung erfahren, indem alle Module eine Auflagefläche mit (im Wesentlichen) identischer Höhe aufweisen, so dass diese gemeinsam als Sitz- und Schlafebene dienen können. Andererseits soll der Innenausbau gut zugänglich und derart ausgestaltet sein, dass zumindest drei Personen im Kraftfahrzeug mitgeführt werden können.

Ein gattungsgemäßes Kraftfahrzeug mit einem Innenausbau zur Ausbildung einer Wohn- und Schlafgelegenheit ist demnach erfindungsgemäß dadurch gekennzeichnet, dass dieses zumindest einen Rücksitz sowie eine Heckklappe und wenigstens eine hintere Seitentür aufweist, wobei die Module und der zumindest eine Rücksitz derart angeordnet sind, dass diese einen L-förmigen Durchgang von der Heckklappe zur wenigstens einen hinteren Seitentür freilassen.

Durch die erfindungsgemäße Idee, wonach sämtliche Funktionseinrichtungen des Innenausbaus einerseits zusätzlich auch als Sitz- und/oder Schlafgelegenheit dienen und gleichzeitig von zwei Seiten aus zugänglich sind, kann die in dem Kraftfahrzeug für den Innenausbau bzw. für die Wohn- und Schlafgelegenheit zur Verfügung stehende Grundfläche optimal ausgenutzt werden, was insbesondere bei einem Innenausbau eines Hochdachkombis oder eines sonstigen vergleichsweise kleinen gewerblichen Kraftfahrzeugs von großem Vorteil ist.

Erfindungsgemäß handelt es sich bei dem Kraftfahrzeug um ein solches, das eine Heckklappe (darunter sollen erfindungsgemäß auch eine oder mehrere seitlich öffnende Hecktüren fallen) sowie zumindest eine hintere Seitentür, vorzugsweise eine Schiebetür, aufweist. Die Module und der wenigstens eine Rücksitz sind derart angeordnet sind, dass diese einen L-förmigen Durchgang von der Heckklappe zur Seitentür freilassen. Die dadurch ermöglichte Nutzung von sowohl der Heckklappe als auch (zumindest) einer Seitentür für den Zugang und den Ausstieg in den bzw. aus dem Innenausbau steigert den Wohnkomfort des erfindungsgemäßen Kraftfahrzeugs beträchtlich.

In einer bevorzugten Ausführungsform des erfindungsgemäßen Kraftfahrzeugs kann vorgesehen sein, dass folgende Funktionsmodule (mindestens zwei, vorzugsweise alle) vorgesehen sind:
- ein Küchenmodul, umfassend zumindest eine Spüle und/oder einen Herd, sowie vorzugsweise noch Tanks für Frisch- und Abwasser, einen Tank für Gas oder ein sonstiges Brennmittel (z.B. wenn der Herd mit Gas oder Spiritus betrieben wird) und/oder gegebenenfalls noch ein oder mehrere Staufächer, um weitere Inneneinrichtungen, die vorzugsweise funktional dem Küchenmodul zugeordnet werden können (z. B. Küchenutensilien), verstauen zu können;
- ein Sanitärmodul, das (zumindest) ein WC umfasst;
- ein Energiemodul, das eine oder mehrere Batterie und/oder eine Brennstoffzelle umfasst, um eine elektrische Energieversorgung zur Verfügung zu stellen, die vorzugsweise unabhängig von einem Bordnetz des Kraftfahrzeuges ist;
- ein Kühlmodul, das zumindest eine Kühlbox und vorzugsweise noch ein oder mehrere Staufächer umfasst.

Da die Auflageflächen der Module erfindungsgemäß auch als Sitz- und/oder Schlafgelegenheit dienen können, ist vorzugsweise vorgesehen, dass diese eine Höhe von maximal 0,5 m, vorzugsweise von maximal 0,4 m und besonders bevorzugt von ca. 0,38 m über (zumindest einem Großteil) der Ladefläche des Kraftfahrzeuges aufweisen, wodurch sicher gestellt werden kann, dass einerseits in einem als bevorzugte Basis dienenden Hochdachkombi bequem gesessen werden kann, und weiterhin - sofern die Auflageflächen auch als Schlafebene dienen - eine ausreichende Kopffreiheit für die darauf schlafenden Personen gegeben ist.

Als "Modul" wird erfindungsgemäß eine integrale und vorzugsweise autark nutzbare Einheit verstanden, bei der die Funktionskomponenten in ein weitgehend offenes, vorzugsweise teilweise geschlossenes und besonders bevorzugt weitgehend oder vollständig geschlossenes Gehäuse integriert sind, wobei das Gehäuse zumindest temporär oberseitig eine vorzugsweise geschlossene Auflagefläche ausbildet, die erfindungsgemäß als Sitz- und/oder Schlafebene dienen kann.

Als "Ladefläche" wird erfindungsgemäß der freie Bodenbereich des Innenraums hinter dem/den Vordersitz(en) verstanden.

Vorteilhafterweise kann vorgesehen sein, dass die Module separat gehandhabt werden können und insbesondere auch variabel innerhalb des Kraftfahrzeuges positioniert und befestigt werden können. Dabei kann insbesondere vorgesehen sein, dass die Module auf (mindestens) einer, gegebenenfalls mehrteiligen Grundplatte befestigbar sind, die wiederum an der Ladefläche des Kraftfahrzeuges befestigbar ist. Für die Befestigung der Module an der Grundplatte und/oder der Grundplatte an der Ladefläche können vorzugsweise lösbare Befestigungsmittel vorgesehen sein. Die Grundplatte kann somit vorzugsweise eine Vielzahl von Befestigungsmitteln aufweisen, wodurch die Module variabel, d.h. an unterschiedlichen Positionen an dieser befestigbar sind, während die Grundplatte selbst an den relativ wenigen, in dem Kraftfahrzeug regelmäßig bereits vorhandenen Verankerungspunkten der Ladefläche befestigt werden kann. Dadurch kann vermieden werden, eine Vielzahl von Befestigungsmittel in die Ladefläche des Kraftfahrzeugs integrieren zu müssen.

Neben einer Befestigung der Module auf der Ladefläche des Kraftfahrzeuges, vorzugsweise unter Nutzung einer Grundplatte, kann weiterhin bevorzugt vorgesehen sein, dass benachbarte Module auch miteinander verbunden werden, wodurch die Stabilität des Innenausbaus erhöht werden kann. Auch für die Befestigung benachbarter Module miteinander sind vorzugsweise lösbare Befestigungsmittel vorgesehen. Dadurch kann der Auf-, Ab und Umbau des Innenausbaus in vergleichsweise kurzer Zeit erfolgen.

In vielen Fällen der Nutzung des erfindungsgemäßen Kraftfahrzeuges wird vorgesehen sein, für den Innenausbau den gesamten, hinter dem oder den Vordersitzen zur Verfügung stehenden Raum zu nutzen. Es ist jedoch gewünscht, dass trotz Innenausbaus drei oder mehr Personen mit dem Kraftfahrzeug transportiert werden können, wozu die Installation zumindest eines Rücksitzes erforderlich ist. Um die von diesem Rücksitz eingenommene Grundfläche der Ladefläche des Kraftfahrzeugs bei einer Nutzung des Kraftfahrzeugs als Wohn- und Schlafgelegenheit ebenfalls nutzen zu können, kann vorteilhafterweise weiterhin vorgesehen sein, dass ein Brückenteil vorhanden ist, das den Rücksitz überspannt und eine Auflagefläche ausbildet, wobei diese Auflagefläche wiederum eine (im Wesentlichen) identische Höhe mit den Auflageflächen der Module aufweist, so dass diese gemeinsam als Sitz- und Schlafebene dienen können.

Da dieses Brückenteil gegebenenfalls die Nutzung des Rücksitzes während der Fahrt behindern kann, kann vorgesehen sein, dass dieses während der Fahrt nicht über dem Rücksitz installiert ist. Vorzugsweise ist das Brückenteil dann so ausgestaltet, dass dieses während der Fahrt an einer anderen Position innerhalb des Laderaums des Kraftfahrzeuges positioniert und befestigt werden kann. Besonders bevorzugt kann dabei vorgesehen sein, dass das Brückenteil auf einem oder mehreren der Module (lösbar) fixierbar ist, wozu diese, beispielsweise in den die Auflageflächen ausbildenden Oberseiten lösbare Befestigungselemente aufweisen können. Hierbei kann das Brückenmodul vorzugsweise einen seitlich verschlossenen oder verschließbaren Stauraum ausbilden, in dem Gegenstände während der Fahrt untergebracht werden können. Sofern das Brückenmodul dann bei der Wohnnutzung des Kraftfahrzeugs so installiert ist, dass es den Rücksitz überspannt, können diese Gegenstände an anderer Stelle untergebracht werden, beispielsweise in zwischen dem Brückenteil und dem Rücksitz ausgebildeten Freiräumen und/oder außerhalb des Kraftfahrzeugs.

Bei der erfindungsgemäßen Ausführungsform des Kraftfahrzeugs, bei der die Module einen L-förmigen Durchgang von der Heckklappe zur Seitentür des Kraftfahrzeuges freilassen, sieht eine bevorzugte Anordnung der einzelnen Module folgendermaßen aus:
- (zumindest) das Küchen- und das Sanitärmodul sind seitlich der Kurzseite des L-förmigen Durchgangs und gleichzeitig in Fahrtrichtung seitlich links der Langseite des L-förmigen Durchgangs angeordnet;
- (zumindest) das Kühl- und das Brückenmodul sind in Fahrtrichtung seitlich rechts der Langseite des L-förmigen Durchgangs angeordnet; und
- (zumindest) das Energiemodul ist seitlich der Stirnseite des L-förmigen Durchgangs angeordnet.

Der L-förmige Durchgang weist einen großen Vorteil auf, wenn der Innenraum des Kraftfahrzeugs als Wohngelegenheit genutzt wird, da dieser eine relativ gute Bewegungsmöglichkeit für sich innerhalb des Innenraums aufhaltende Personen und zudem ein bequemes Sitzen der Personen auf den Auflageflächen der Module mit in den L-förmigen Durchgang ragenden Beinen ermöglicht.

Für eine sinnvolle Nutzung des Innenraums des Kraftfahrzeuges als Schlafgelegenheit kann jedoch erforderlich sein, den L-förmigen Durchgang zumindest teilweise von (mindestens) einer, gegebenenfalls mehrteiligen Abdeckplatte derart abzudecken, dass diese eine Auflagefläche ausbildet, die mit den Auflageflächen der Module eine (im Wesentlichen) identische Höhe aufweist. Für die Nutzung als Schlafgelegenheit wird somit der L-förmige Durchgang abgedeckt und auf eine Ebene mit den Auflageflächen der Module gebracht.

Eine bevorzugte Ausführungsform kann dann vorsehen, dass die Abdeckplatte mittels eines Scharniers vorzugsweise zur Ausbildung eines Prismas mit dreieckiger Seitenfläche klappbar ist, wobei die zusammengeklappte Abdeckplatte auf der Auflagefläche eines oder mehrerer Module befestigbar ist, wodurch diese eine Rückenstütze für eine oder mehrere sitzenden Personen ausbilden kann. Somit wird auch die Abdeckplatte in einer Doppelfunktion genutzt. Es ist auch möglich, dass die vorder- und rückseitigen Flächen der Abdeckplatte im zusammengeklappten Zustand direkt aneinander liegen und so als Rückenstütze dienen.

Alternativ oder zusätzlich zu einer Abdeckplatte, die auch als Rückenstütze dienen kann, kann weiterhin bevorzugt vorgesehen sein, den L-förmigen Durchgang bei der Nutzung als Schlafgelegenheit teilweise mit einer Tischplatte abzudecken, wobei diese dann eine Auflagefläche ausbildet, die wiederum mit den Auflageflächen der Module eine im Wesentlichen identische Höhe aufweist. Sofern der Innenausbau gerade nicht als Schlaf- sondern als Wohngelegenheit genutzt wird, kann die Tischplatte als Tisch genutzt werden, in dem diese lösbar auf einer Tischstütze befestigbar ist, wodurch die Auflagefläche der Tischplatte dann oberhalb der Auflagenflächen der Module positioniert ist.

Bei einer weiterhin bevorzugten Ausführungsform des erfindungsgemäßen Kraftfahrzeuges weist dieses einen Tragrahmen auf, der sich im Innenraum zumindest über Abschnitte der Seiten und des Hecks des Kraftfahrzeuges erstreckt, dabei vorzugsweise oberhalb oder im Bereich der oberen Fensterlinie von in die Seiten und/oder das Heck des Fahrzeugs integrierten Fenstern angeordnet ist, und zudem Befestigungselemente zur lösbaren Befestigung von Funktionsteilen aufweist. Ein solcher Tragrahmen kann in vielerlei Hinsicht genutzt werden, indem an diesen beispielsweise Vorhänge als Sichtschutz und zur Abdunkelung bei der Nutzung als Schlafgelegenheit, ein Moskitonetz, Schränke oder sonstige beliebige Funktionsteile befestigt werden können. Dieser Tragrahmen ist auch unabhängig von dem sonstigen, modulartigen Innenausbau nutzbar.

Die Erfindung wird nachfolgend anhand von in den Zeichnungen dargestellten Ausführungsbeispielen näher erläutert. In den Zeichnungen zeigt:
- Fig. 1:: in einer schematischen Darstellung eine Ausführungsform eines erfindungsgemäßen Kraftfahrzeugs;
- Fig. 2:: das Kraftfahrzeug gemäß Fig. 1 in einer weiteren schematischen Darstellung;
- Fig. 3:: das Kraftfahrzeug gemäß den Fig. 1 und 2 in einer detaillierteren Grundrissdarstellung;
- Fig. 4:: das Kraftfahrzeug gemäß der Fig. 3 in einem Längsschnitt;
- Fig. 5:: die Installation von Grundplatten als erste Schritte für den Innenausbau des Kraftfahrzeugs gemäß den Fig. 1 bis 4;
- Fig. 6:: das Kraftfahrzeug gemäß den Fig. 1 bis 5 gemäß einer ersten Nutzungsmöglichkeit;
- Fig. 7:: das Kraftfahrzeug gemäß den Fig. 1 bis 6 gemäß einer zweiten Nutzungsmöglichkeit;
- Fig. 8:: ein Detail des Kraftfahrzeugs gemäß der Fig. 7 in einer Seitenansicht;
- Fig. 9:: das Kraftfahrzeug gemäß den Fig. 1 bis 8 gemäß einer dritten Nutzungsmöglichkeit;
- Fig. 10:: ein Detail des Kraftfahrzeugs gemäß der Fig. 9 in einer Seitenansicht;
- Fig. 11:: das Kraftfahrzeug gemäß den Fig. 1 bis 10 gemäß einer vierten Nutzungsmöglichkeit;
- Fig. 12:: das Kraftfahrzeug gemäß den Fig. 1 bis 11 gemäß einer fünften Nutzungsmöglichkeit;
- Fig. 13:: das Kraftfahrzeug gemäß den Fig. 1 bis 12 gemäß einer sechsten Nutzungsmöglichkeit;
- Fig. 14:: das Kraftfahrzeug gemäß den Fig. 1 bis 13 gemäß einer siebten Nutzungsmöglichkeit;
- Fig. 15:: das Kraftfahrzeug gemäß der Fig. 1 bis 14 gemäß einer achten Nutzungsmöglichkeit;
- Fig. 16:: das Kraftfahrzeug gemäß der Fig. 15 in einem Längsschnitt;
- Fig. 17:: das Kraftfahrzeug gemäß den Fig. 1 bis 16 gemäß einer neunten Nutzungsmöglichkeit;
- Fig. 18:: das Kraftfahrzeug gemäß den Fig. 1 bis 17 gemäß einer zehnten Nutzungsmöglichkeit;
- Fig. 19:: das Kraftfahrzeug gemäß den Figuren 1 bis 18 in einer elften Nutzungsform.
- Fig. 20:: das Kraftfahrzeug gemäß den Fig. 1 bis 19, zusätzlich ausgestattet mit einem erfindungsgemäßen Tragrahmen;
- Fig. 21:: das Kraftfahrzeug gemäß der Fig. 20 in einem Querschnitt;
- Fig. 22:: das Kraftfahrzeug gemäß der Fig. 20 in einem alternativen Querschnitt;
- Fig. 23:: eine alternative Ausführungsform eines erfindungsgemäßen Kraftfahrzeugs; und
- Fig. 24:: eine alternative Ausführungsform eines erfindungsgemäßen Kraftfahrzeugs.

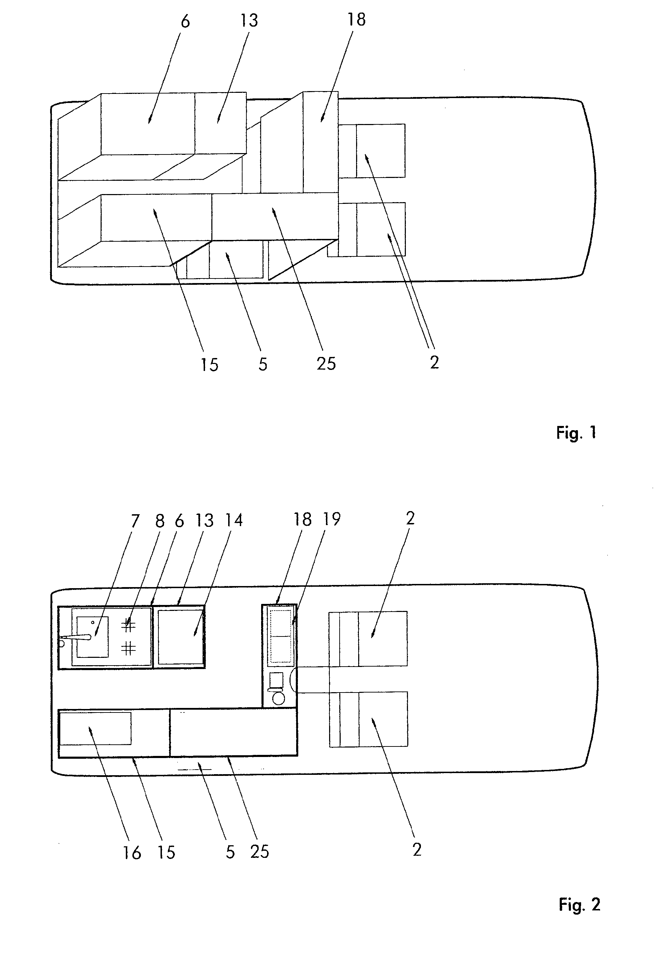

Die Fig. 1 bis 24 zeigen Ausführungsformen eines erfindungsgemäßen Kraftfahrzeugs mit einem Innenausbau zur Ausbildung einer Wohn- und Schlafgelegenheit. Die Basis des erfindungsgemäßen Kraftfahrzeugs bildet ein sogenannter Hochdachkombi, nämlich ein Volkswagen® Caddy® (Modell: 2K) mit kurzem Radstand. Hierbei handelt es sich um ein als Nutzfahrzeug konzipiertes Fahrzeug der Kompaktklasse, das dementsprechend vergleichsweise geringe Außenabmessungen aufweist (Fahrzeuglänge: ca. 440 cm; Radstand: ca. 268 cm). Von dem Volkswagen® Caddy® existiert auch eine für eine primäre Nutzung als PKW gedachte Ausführung, die den Modellzusatz "Kombi" trägt. Diese Ausführung zeichnet sich insbesondere durch Rücksitze sowie seitliche Fenster im Bereich der Rücksitze aus. Der Volkswagen® Caddy® weist neben zwei, als konventionelle Klapptüren ausgebildete vordere Seitentüren 1, die einen Zugang zu den Vordersitzen 2 ermöglichen, zwei hintere Seitentüren, nämlich Schiebetüren 3, sowie eine Heckklappe 4 auf, die den Zugang zu der Ladefläche bzw. den darauf montierten Rücksitzen 5 ermöglichen.

Die in den Fig. 1 bis 22 dargestellte Ausführungsform eines erfindungsgemäßen Innenausbaus für den Volkswagen® Caddy® ist für die Verwendung von insgesamt drei Sitzen in dem Fahrgastraum ausgelegt, wobei zwei Vordersitze 2 - Fahrer- und Beifahrersitz - sowie ein einzelner, hinter dem Beifahrersitz angeordneter Rücksitz 5 vorgesehen sind. Trotz des Innenausbaus besteht somit die Möglichkeit, bis zu drei Personen zu transportieren, wobei der erfindungsgemäße Innenausbau zudem auch für bis zu drei Personen Schlafgelegenheiten bietet.

Der Innenausbau ist weitgehend in Module untergliedert, die wiederum Funktionsmodule integrieren, die sich aus funktional gruppierten Funktionskomponenten zusammensetzen. Diese Module sind erfindungsgemäß seitlich entlang eines L-förmigen Durchgangs angeordnet, der sich von der Heckklappe 4 zu einer, im vorliegenden Fall der linken (in Fahrtrichtung gesehen) Schiebetür 3 des Caddy® erstreckt.

Seitlich der Kurzseite des L-förmigen Durchgangs ist, der Heckklappe 4 benachbart, ein Küchenmodul 6 vorgesehen. Dieses kombiniert als Funktionselemente eine Spüle 7, einen Gasherd 8 (alternativ ist auch der Einbau eines Anderen Herds, insbesondere eines mit Spiritus betrieben Herds vorteilhaft möglich) sowie - unterhalb von Spüle 7 und Gasherd 8 - weitere, für deren Betrieb erforderliche Funktionskomponenten, wie einen Frischwassertank 9 und einen Abwassertank 10 sowie einen Gasdruckbehälter 11. Seitlich, d.h. zwischen dem Küchenmodul 6 und der benachbarten Seitenwand des Caddy® weist die dort serienmäßig verbaute Innenverkleidung zudem noch ein Ablagefach 12 auf, das als Geschirr- oder Bad- bzw. Wäscheschrank genutzt werden kann.

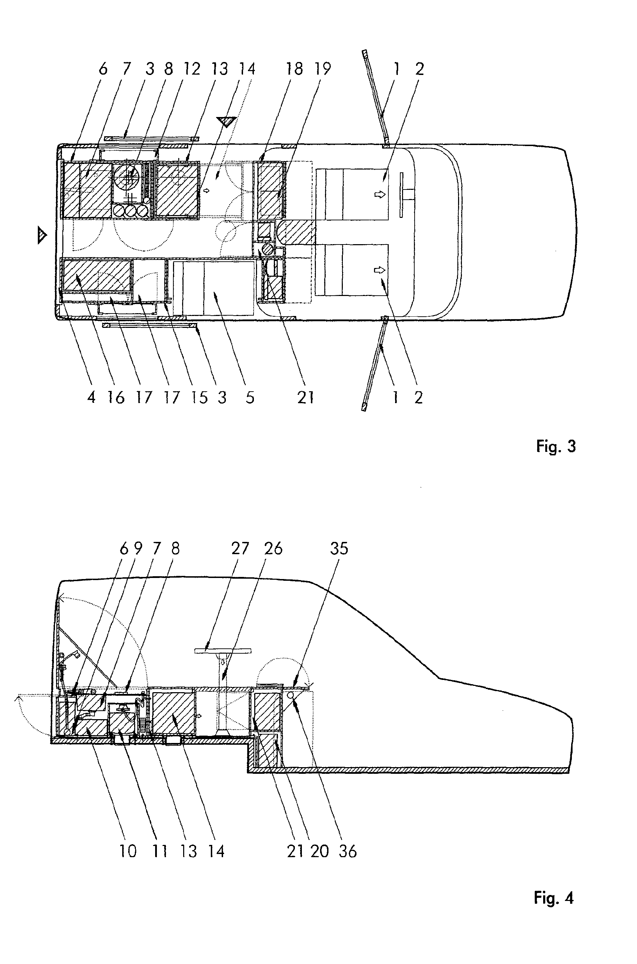

In Fahrtrichtung vor dem Küchenmodul 6 und bis zum Ausschnitt der dortigen Schiebetür 3 reichend, schließt sich an das Küchenmodul 6 ein Sanitärmodul 13 an, in das eine konventionelle Campingtoilette 14 integriert ist. Dabei ist vorgesehen, dass die Campingtoilette 14 bei Nichtgebrauch innerhalb des dazugehörigen Modulgehäuses positioniert ist und für die Benutzung aus diesem in Fahrtrichtung herausgezogen werden kann, wozu das Modulgehäuse mit einer entsprechenden Klappöffnung versehen ist. Dabei erfolgt eine Führung der Bewegung der Campingtoilette 14 mittels an der Innenseite des Modulgehäuses laufenden Laufräder. Zur Benutzung der Campingtoilette 14 wird diese somit temporär in dem L-förmigen Durchgang positioniert (vgl. Fig. 3).

Seitlich der Langseite des L-förmigen Durchgangs ist in Fahrtrichtung rechts - benachbart zur Heckklappe 4 - ein Kühlmodul 15 vorgesehen, das eine Kühlboxschrank 16 umfasst. Hierbei handelt es sich beispielsweise um eine konventionelle Kompressor-Kühlbox, wie dieser als Campingzubehör erhältlich ist. Aufgrund der vergleichsweisen kleinen Abmessung der Kühlbox 16 im Vergleich zu den Abmessungen des Modulgehäuses ergibt sich innerhalb des Modulgehäuses noch ein Freiraum, der in Form von zwei, durch eine vertikale Trennwand voneinander getrennte Stauräume 17 (für Besteck und Wäsche) genutzt wird.

Seitlich der Stirnseite des L-förmigen Durchgangs umfasst der erfindungsgemäße Innenausbau quer zur Fahrtrichtung weiterhin noch ein Energiemodul 18, in das eine Brennstoffzelle 19 mit dazugehörigem Brennstofftank (unter der Brennstoffzelle 19) sowie Abfalltank 20 integriert ist. Auch die Brennstoffzelle 19 ist kleiner als die Innenabmessungen des dazugehörigen Modulgehäuses, so dass Stauraum bleibt, der in Form eines durch eine Trennwand von dem Brennstoffelement abgetrennten Staufachs 21 genutzt wird.

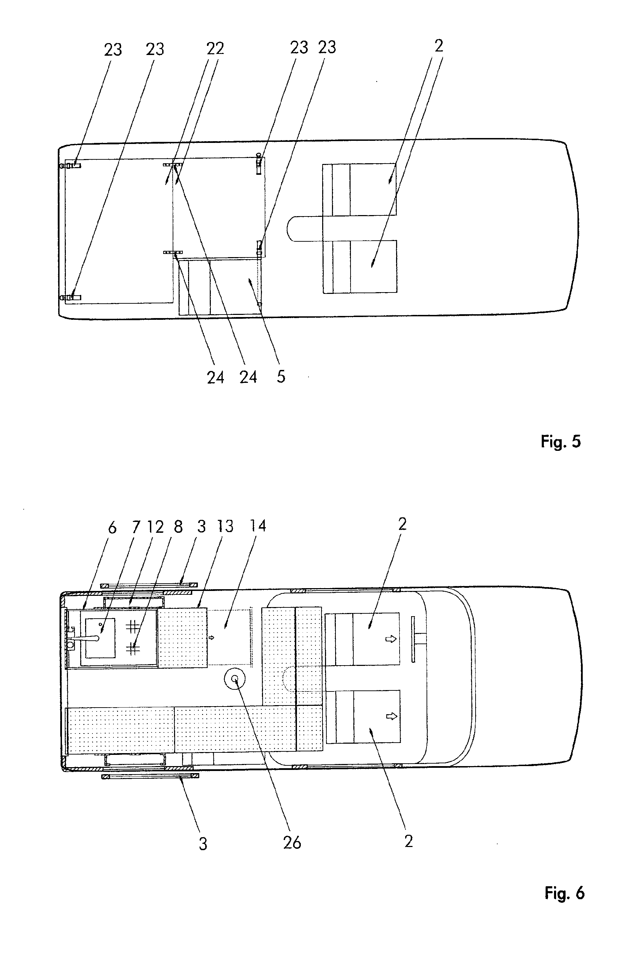

In der Fig. 5 ist der Caddy® ohne eingebaute Module dargestellt. Gezeigt ist jedoch, dass auf der Ladefläche, soweit diese nicht von dem Rücksitz 5 genutzt ist, eine zweiteilige Grundplatte 22 installiert ist, die mittels lösbarer Befestigungselemente in Form von Befestigungsgurten 23 an in die Ladefläche des Caddy® integrierten Befestigungsösen befestigt ist. Die zwei Teile der Grundplatte 22 sind mittels Schraubleisten 24 miteinander verbunden. In der Grundplatte 22 sind an einer Vielzahl von Positionen Befestigungselemente in Form von Gewindehülsen eingelassen (nicht dargestellt), über die die Module und andere Funktionseinrichtungen des erfindungsgemäßen Innenausbaus mit der Grundplatte 22 und somit indirekt mit der Ladefläche des Caddy® verbunden werden können. Hierzu weisen die Module und die anderen Funktionseinrichtungen Anschlussflansche auf, die mittels Gewindebolzen, die in die Gewindehülsen der Grundplatte 22 eingeschraubt werden können, verschraubt werden. Zusätzlich dazu sind auch die, jeweils mit einem weitgehend geschlossenen, jedoch über zu öffnende Zugangsklappen ausgestatteten Modulgehäuse lösbar miteinander verbindbar, wozu wiederum Schraubverbindungen eingesetzt werden. Die Verbindung der (benachbarten) Module untereinander erhöht die Stabilität des Innenausbaus.

Der Innenausbau umfasst weiterhin noch eine als Brückenteil 25 bezeichnete Funktionseinrichtung, die zwar kein Funktionsmodul mit Funktionskomponenten integriert, jedoch auch modulartig in der erfindungsgemäßen Inneneinrichtung nutzbar und zudem mit den benachbarten Modulen, vorliegend dem Kühlmodul 15 sowie dem Energiemodul 18, über Verschraubungen verbindbar ist. Das Brückenteil 25 besteht im Wesentlichen aus einem U-förmigen, zu einer Seite (im Einbau zur Seite der benachbarten Schiebetür) hin offenen Gehäuse, das über dem Rücksitz 5 positioniert kann, wobei dazu die Rücklehne des Rücksitzes 5 nach vorne geklappt werden muss.

Die Hauptfunktion des Brückenteils 25 liegt darin, gemeinsam mit den Modulen sowie weiteren Funktionseinrichtungen eine Sitz- und/oder Schlafebene auszubilden, auf denen die den Innenausbau nutzenden Personen sitzen bzw. liegen können. Hierzu bildet die Oberseite des Brückenteils 25 eine Auflagefläche aus, die im Wesentlichen auf derselben Höhe liegt, wie Auflageflächen, die von den Oberseiten der Modulgehäuse jedes der Module ausgebildet werden.

Die Oberseiten der Modulgehäuse sind teilweise aufklappbar ausgebildet, um einen Zugriff auf die darunter liegenden Funktionskomponenten ermöglichen. Dazu sind die Oberseiten mittels Scharnieren mit der der Karosserie des Caddy® benachbarten Seitenfläche des dazugehörigen Modulgehäuses verbunden. Alle Innenvolumina der Module sind in jedem Fall durch Türen und/oder Klappen erreichbar ausgebildet, um insbesondere eine Befestigung an der Ladefläche zu ermöglichen.

Die Fig. 6 bis 18 zeigen verschiedene Möglichkeiten zur Nutzung des erfindungsgemäßen Innenausbaus.

In der Fig. 6 ist dargestellt, wie die seitlich der Lang- sowie der Stirnseite des L-förmigen Durchgangs angeordneten Module und Funktionseinrichtungen als (Eck-) Sitzbank nutzbar sind. Dabei sind die als Sitzfläche dienenden Auflageflächen der Module sowie des Brückenteils 25 mit Sitzkissen belegt. Die Oberseite des Küchenmoduls 6 ist aufgeklappt, um eine Nutzung von Spüle 7 und Gasherd 8 zu ermöglichen. Gleichzeitig dient die Auflagefläche des Sanitärmoduls 13 als Arbeitsfläche bei der Küchennutzung. Dargestellt in Fig. 6 ist zudem noch, die Position der Campingtoilette 14, wenn diese aus dem dazugehörigen Modulgehäuse herausgezogenen ist, sowie eine im Winkel des L-förmigen Durchgangs angeordnete, ebenfalls lösbar mit der Grundplatte 22 verbundenen Tischstütze 26.

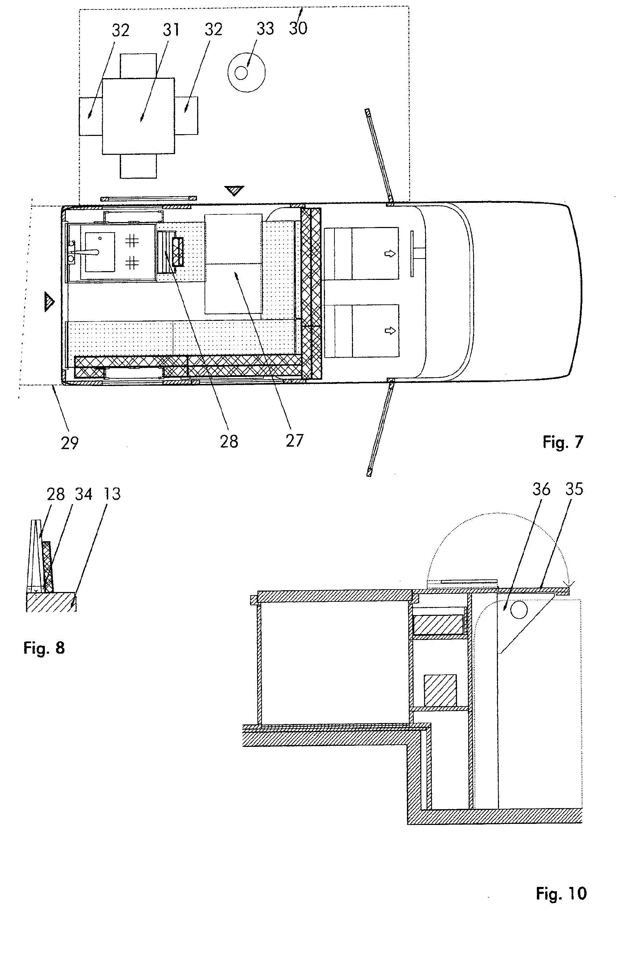

Die Fig. 7 zeigt eine Nutzungsmöglichkeit, die - basierend auf der Nutzungsmöglichkeit gemäß der Fig. 6 - eine Sitzgruppe ausbildet, wobei nunmehr auf der in der Fig. 6 dargestellten Tischstütze 26 eine Tischplatte 27 montiert ist. Die Tischplatte 27 ist mittig mittels Klappscharnieren klappbar und kann somit in zwei Größen genutzt werden. Dargestellt ist auch, dass nunmehr die - bei der Nutzungsmöglichkeit gemäß der Fig. 6 noch als Arbeitsfläche genutzte - Auflagefläche des Sanitärmoduls 13 ebenfalls als Sitzplatz dient, wozu darauf wieder ein Sitzkissen abgelegt ist. Weiterhin ist noch eine Rückenstütze 28 installiert, an der sich die auf diesem Sitzplatz sitzende Person rückseitig abstützen kann. Gleichzeitig dient die Rückenstütze als Raumteiler, der die "Küche" von dem "Wohnbereich" trennt.

In der Fig. 7 ist weiterhin noch die Möglichkeit angedeutet, heckseitig ein Vorzeit 29 anzubauen, wobei das Vorzelt 29 die nach oben geschwenkte Heckklappe 4 als Dach nutzt. Weiterhin ist auf derjenigen Seite des Caddy®, auf der der L-förmige Durchgang einen Zugang in den Innenausbau ermöglicht, ein Vordach 30 vorgesehen, unter dem beispielhaft ein Campingtisch 31 mit Stühlen 32 sowie ein Grill 33 positioniert sind. Auch ist in der Fig. 7 dargestellt, dass zusätzliche Sitzkissen, die bei einer anderen Nutzungsmöglichkeit für die Polsterung einer Liegefläche eingesetzt werden, als Rückenlehne für die Ecksitzbank genutzt werden können.

Die Fig. 8 zeigt in einem Längsschnitt die als Rückenstütze 28 bzw. Raumteiler dienende Funktionseinrichtung, die zwei Platten umfasst, die mittels Scharnieren miteinander verbunden sind und dadurch um 180° zueinander verschwenkbar sind. Zur Nutzung als Rückenstütze bzw. Raumteiler werden die beiden Platten mittels zwei seitlichen Befestigungsanschlägen 34 in einer (umgekehrt) V-förmigen Stellung oder gemäß einer anderen Ausführungsform unmittelbar aneinander liegend fixiert und an der Oberseite des Sanitärmoduls 13 (lösbar) befestigt.

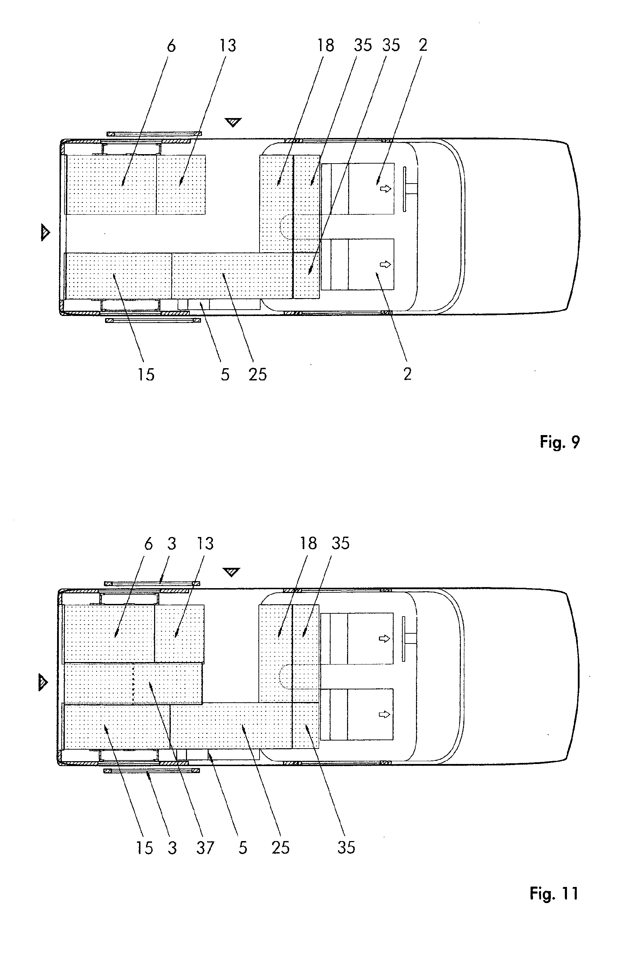

Die Fig. 9 und 10 zeigen Verlängerungsteile 35, die stirnseitig (in Fahrtrichtung) mit dem Energiemodul 18 sowie dem Brückenteil 25 verbunden sind und der Vergrößerung der Auflageflächen dieser Module dienen. Die Verlängerungsteile 35 sind klappbar ausgebildet, wodurch diese auf den Auflageflächen des Energiemoduls sowie der Brücke aufliegen können. Dadurch wird ermöglicht, die Vordersitze 2 für die Fahrt hinreichend weit nach hinten verschieben zu können. Wird der Caddy® dagegen als Wohn- und Schlafgelegenheit genutzt, kann vorgesehen sein, die beiden Vordersitze 2 soweit wie möglich in den beim Caddy® serienmäßig verbauten Schienen nach vorne zu verschieben und durch ein Verschwenken der Verlängerungsteile 35 um ca. 180° um eine horizontale Achse den durch das Verschieben der Vordersitze 2 frei werdende Raum ebenfalls als Sitz- und/oder Schlafebene zu nutzen. Dabei werden die Verlängerungsteile 35 durch um vertikale Achsen verschwenkbare Haltestreben 36 gesichert.

Die Fig. 11 bis 18 zeigen die Umwandlung des Innenausbaus von der Ausgestaltung als Wohngelegenheit zu einer Ausgestaltung als Schlafgelegenheit. Dabei wird eine alle Auflageflächen der Module sowie des Brückenteils 25 umfassende Schlafebene ausgebildet.

In der Fig. 11 ist dargestellt, wie hierzu ein erster Abschnitt des L-förmigen Durchgangs mittels einer Abdeckplatte 37 abgedeckt wird. Bei dieser Abdeckplatte 37 handelt es sich um die zuvor als Rückenstütze 28 eingesetzte Funktionseinrichtung, wobei hierzu die beiden Platten in eine gemeinsame Ebene verschwenkt werden.

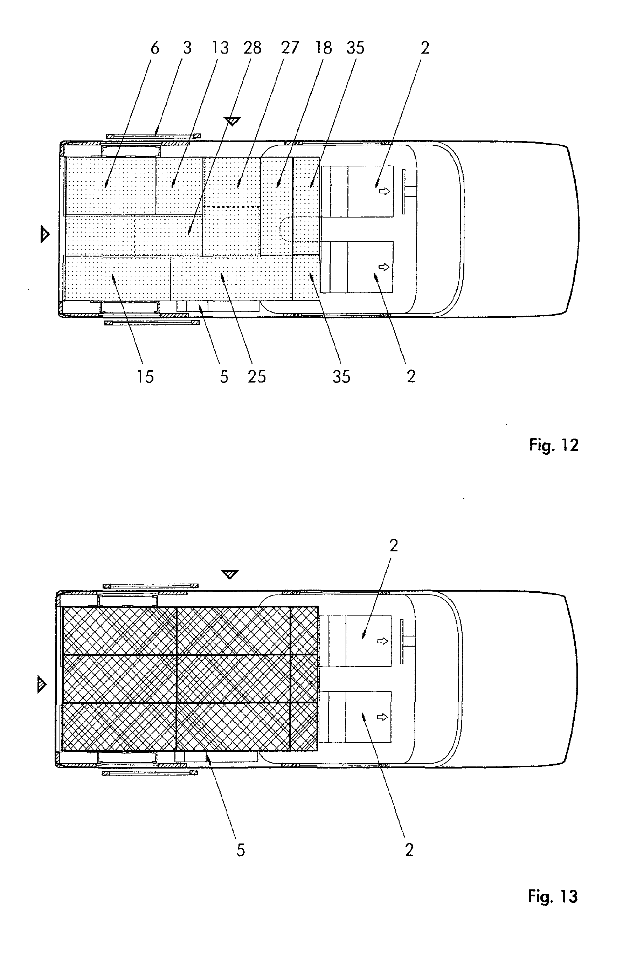

Die Fig. 12 zeigt, wie auch der zweite Abschnitt des L-förmigen Durchgangs abgedeckt wird, um eine Auflagefläche auszubilden, die mit den Auflageflächen der Module, des Brückenteils 25 sowie der Abdeckplatte 37 im Wesentlichen auf derselben Höhe liegt. Zur Abdeckung dieses Abschnitts des L-förmigen Durchgangs dient die Tischplatte 27, deren zwei Hälften nunmehr in eine Ebene ausgeklappt sind. Hierzu ist erforderlich zunächst das Tischbein 26 zu demontieren, wobei dieses unter der bereits installierten Abdeckplatte 37 gelagert werden kann.

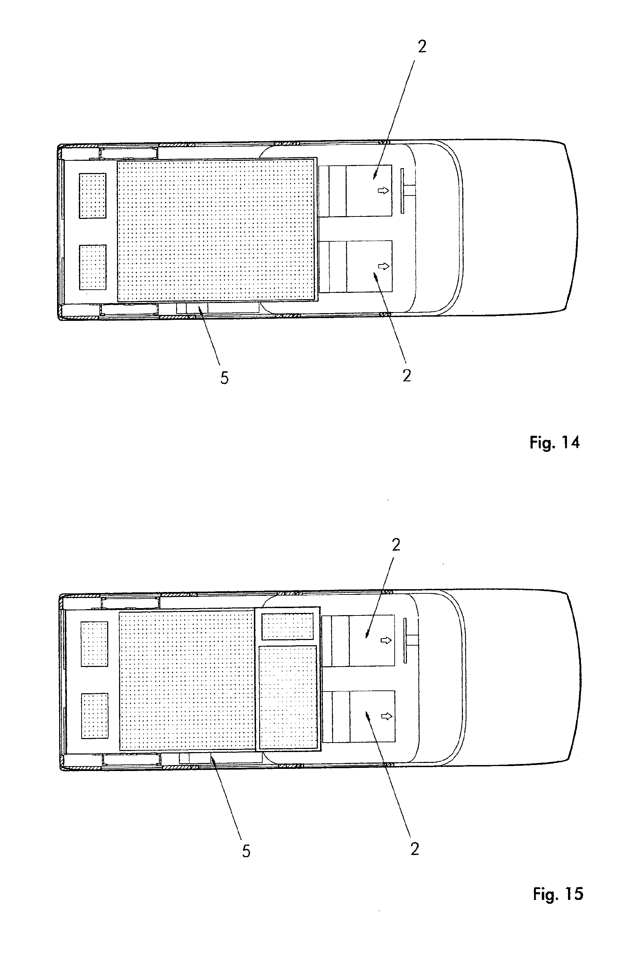

Die Fig. 13 zeigt, wie dann die gesamte Schlafebene mittels Sitz- bzw. Liegekissen abgedeckt wird, um eine Matratze auszubilden. Dabei sind die Sitz- bzw. Liegekissen aus mehreren Einzelteilen zusammengesetzt, die beispielsweise mittels eines Bettlackens zusammen gehalten werden können. Bei den auf die Abdeckplatte 37, die Tischplatte 27 und die Auflageflächen des Küchenmoduls 6 sowie des Sanitärmoduls 13 aufgelegten Sitz- bzw. Liegekissen handelt es sich um diejenigen, die zuvor als Rückenlehnen genutzt wurden. In der Fig. 14 ist nochmals verdeutlicht, wie die somit geschaffene Schlafebene als komfortable Schlafmöglichkeit für zwei erwachsene Personen dienen kann.

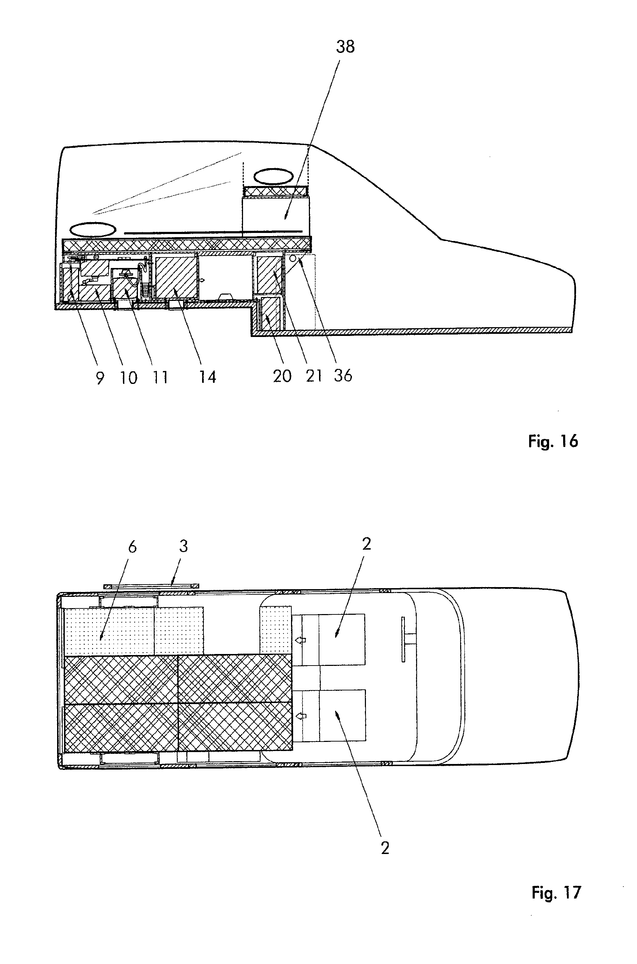

Die Figuren 15 und 16 zeigen zudem noch die Möglichkeit der Installation einer dritten Schlafgelegenheit für ein Kind bis zum Alter von ca. 6 bis 8 Jahren. Hierzu wird ein zusammenklappbares, im aufgeklappten Zustand U-förmiges Einbauteil 38 am vorderen Ende der Liegefläche quer zur Längsachse des Fahrzeugs installiert und mit Netzumwehrungen gesichert, um eine Schlafgelegenheit auszubilden.

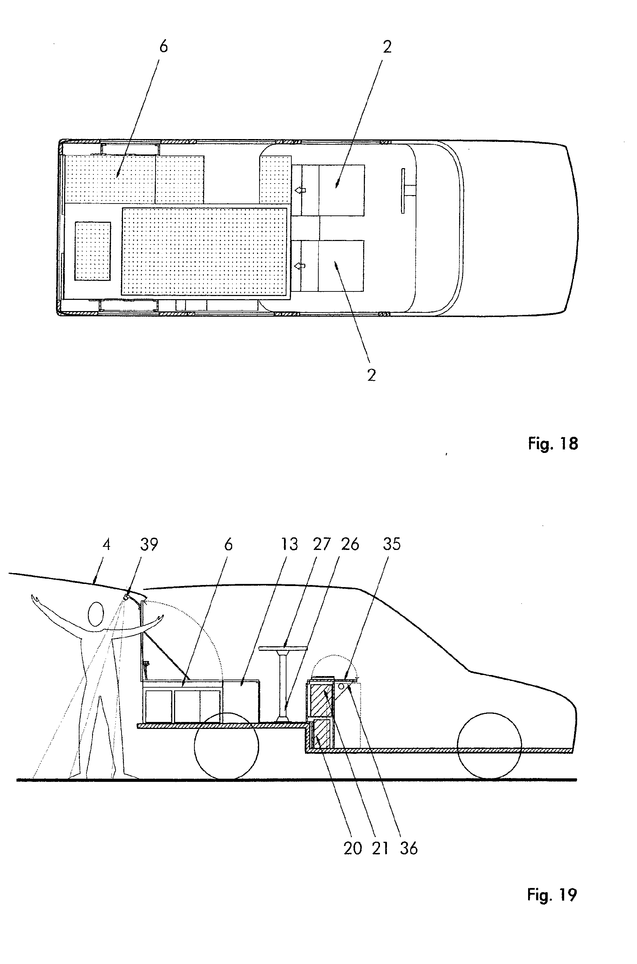

Die Fig. 17 und 18 zeigen weitere Nutzungsmöglichkeiten des erfindungsgemäßen Innenausbaus, wobei in der Fig. 17 nur zwei Drittel der maximal zur Verfügung stehenden, von den Auflageflächen der Module, des Brückenteils 25, der Abdeckplatte 37 sowie der Tischplatte 27 ausgebildeten Schlafebene als Liegefläche genutzt wird.

In der Fig. 17 ist dargestellt, wie diese Liegefläche als Liegesofa genutzt werden kann. Dabei können die nicht für die Liegefläche genutzten Sitz- bzw. Liegekissen als Rückenlehne eingesetzt werden. Bei dieser Nutzung des Innenausbaus verbleiben im Bereich der in Fahrtrichtung linken Schiebetür 3 noch zwei Sitzgelegenheiten. Zudem kann die Auflagefläche des Küchenmoduls 6 als Beistelltisch genutzt werden.

In der Fig. 18 ist dargestellt, wie diese Nutzungsmöglichkeit auch dazu vorgesehen sein kann, auf der Liegefläche eine Schlafgelegenheit für eine erwachsene Person auszubilden. Sofern der Caddy® lediglich von einer Person genutzt wird, kann dann auch vorgesehen sein, diese Konfiguration dauerhaft beizubehalten, wodurch eine gleichzeitige Nutzung als Wohn- und Schlafgelegenheit, d.h. ohne Umbaumaßnahmen möglich ist.

In der Fig. 19 ist dargestellt, wie die Spülarmatur 39 als Dusche eingesetzt werden kann, sofern diese bei geöffneter Heckklappe 4 in geeigneter Höhe nach außen weisend montiert wird.

Bei einer Ausführungsform des erfindungsgemäßen Kraftfahrzeugs mit einem Spiritus-Herd, kann eine klapp- bzw. versenkbare Spülarmatur zum Einsatz kommen, die (aus Sicherheitsgründen) nicht mit einer herausziehbaren Brauseeinrichtung versehen ist. Es kann jedoch eine gesonderte Brause im Wassersystem oder mittels eines gesonderten Wassertanks angebracht werden, so dass eine Brause wie abgebildet und bevorzugt angebracht werden kann.

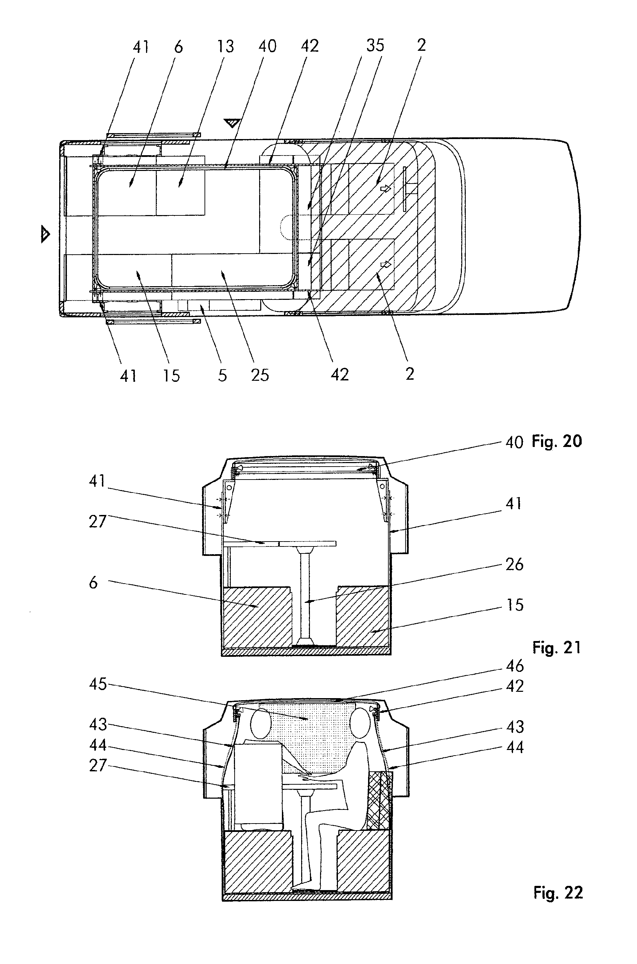

Die Fig. 20 bis 22 zeigen noch eine besondere Funktionseinrichtung des erfindungsgemäßen Innenausbaus, die auch unabhängig von den Modulen eingesetzt werden kann. Hierbei handelt es sich um einen im Dachbereich des Caddy® um die Ladefläche verlaufenden Tragrahmen 40, in den Befestigungselemente integriert sind. Die Befestigungselemente können beispielsweise als Schiene ausgebildet sein, in die geeignete Befestigungsmittel eingesetzt werden können. Der Tragrahmen 40 wird heckseitig von zwei Stützen 41 getragen, die beispielsweise mit dem Küchenmodul 6 sowie dem Kühlmodul 15 oder auch mit der Innenverkleidung des Caddy® verbunden sein können. Frontseitig wird der Tragrahmen 40 dadurch gehalten, dass sich zwei Längsstreben 42 des Tragrahmens 40 bis in ein Ablagefach erstrecken, das bei dem Caddy® oberhalb der Vordersitze 2 angeordnet ist. Der Tragrahmen 40 kann beispielsweise dazu dienen, Vorhänge 43 oder ein Mückennetz 44 zu tragen, wobei auch die Befestigung anderer Funktionsteile, wie beispielsweise eines kleinen Flachbildfernsehers 45, Leuchten oder eines oder mehrerer Schränke möglich ist. Auch kann der Tragrahmen 40 einen Deckenhimmel 46 tragen.

Bei einem von den Modulen unabhängigen Einbau des Tragrahmens kann vorgesehen sein, eine Befestigung an dem Küchenmodul 6 und dem Kühlmodul 15 durch einen querliegenden Bodenholm zu ersetzen, an dem die Seitenstützen befestigt sind.

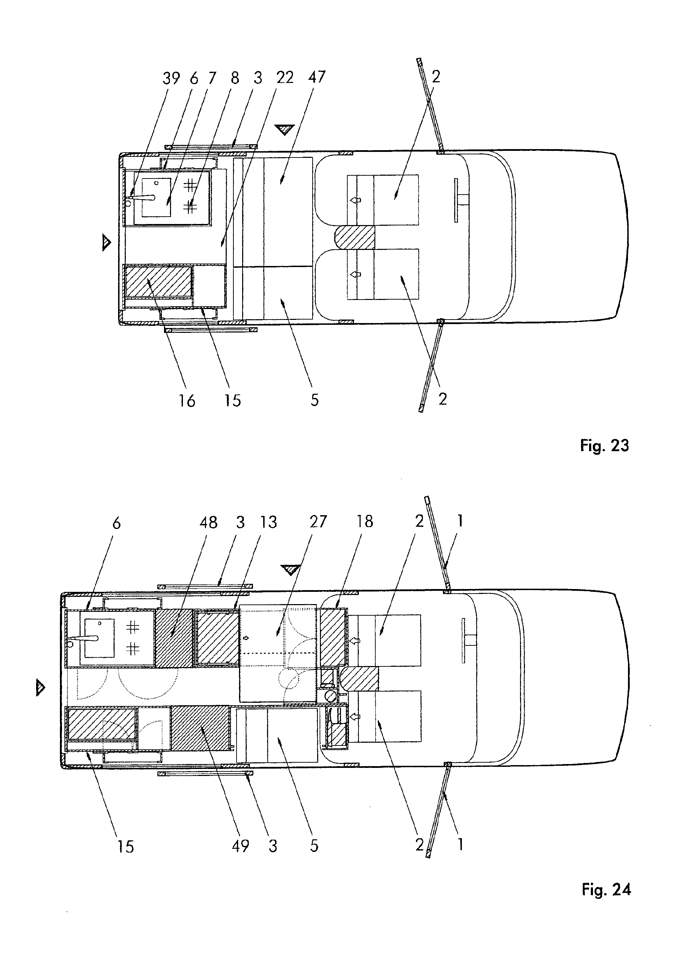

Fig. 23 verdeutlicht nochmals die Variabilität des erfindungsgemäßen Innenausbaus. Bei der dortigen Ausführungsform ist vorgesehen, neben dem einzelnen Rücksitz 5 zusätzlich noch eine Rückbank 47 für zwei weitere Mitfahrer vorzusehen. Dadurch beschränkt sich die für den Innenausbau nutzbare Fläche auf das hinter der Rückbank und dem Rücksitz befindliche Gepäckabteil. Lediglich als Beispiel ist verdeutlicht, wie dort das Küchenmodul 6 sowie das Kühlmodul 15 integriert sein können, um - beispielsweise in Verbindung mit einem geräumigen Vor- oder Zusatzzelt - den Caddy® auch bei einer Reise zu fünft Personen vorteilhaft zu nutzen. Die Variabilität des Innenausbaus aufgrund der Befestigung von einzelnen Modulen auf einer Grundplatte 22 ermöglicht selbstverständlich, anstelle des Kühlmoduls 15 oder des Küchenmoduls 6 beispielsweise auch das Energiemodul 18 mitzuführen.

In der Fig. 24 ist eine Möglichkeit gezeigt, den erfindungsgemäßen Innenausbau bei einem anderen, etwas größeren Kraftfahrzeug ebenfalls in Form eines Hochdachkombis anzuwenden. Die Basis des dortigen erfindungsgemäßen Kraftfahrzeugs bildet ebenfalls ein Volkswagen® Caddy® (Modell: 2K), hier jedoch mit einer Fahrzeuglänge von ca. 488 cm und langem Radstand von ca. 301 cm (Bezeichnungszusatz: Maxi). Dieser zeichnet sich gegenüber dem Caddy® mit kurzem Radstand durch eine zusätzliche Innenraumlänge im Bereich der Ladefläche von ca. 0,47 m. Dieser zusätzlich zur Verfügung stehende Raum wird im Wesentlichen für den Einbau von zwei zusätzlichen Stauraummodulen 48, 49 und einer Verbreiterung der Tischplatte 27 genutzt.

## Patentansprüche

1. Kraftfahrzeug, insbesondere Hochdachkombi, mit einem Innenausbau zur Ausbildung einer Wohn- und Schlafgelegenheit,
mit mindestens zwei Modulen (6, 13, 15, 18), die jeweils unter einer Auflagefläche ein Funktionsmodul mit Funktionskomponenten aufweisen, wobei die Auflageflächen eine im Wesentlichen identische Höhe aufweisen, so dass diese gemeinsam als Sitz- und/oder Schlafebene dienen,
**dadurch gekennzeichnet, dass**
dieses zumindest einen Rücksitz (5) sowie eine Heckklappe (4) und wenigstens eine hintere Seitentür aufweist, wobei die Module (6, 13, 15, 18) und der zumindest eine Rücksitz (5) derart angeordnet sind, dass diese einen L-förmigen Durchgang von der Heckklappe (4) zur wenigstens einen hinteren Seitentür freilassen.

2. Kraftfahrzeug gemäß Anspruch 1, **gekennzeichnet durch** folgende Funktionsmodule:
- Küchenmodul (6), umfassend eine Spüle (7) und/oder einen Herd (8);
- Sanitärmodul (13), umfassend ein WC;
- Energiemodul (18), umfassend eine Batterie und/oder eine Brennstoffzelle (19);
- Kühlmodul (15), umfassend eine Kühlbox (16).

3. Kraftfahrzeug gemäß Anspruch 1 oder 2, **dadurch gekennzeichnet, dass** die Auflageflächen eine Höhe von max. 0,5 m, vorzugsweise von max. 0,4 m und besonders bevorzugt von ca. 0,38 m aufweisen.

4. Kraftfahrzeug gemäß einem der vorhergehenden Ansprüche, **dadurch gekennzeichnet, dass** die Module auf einer Grundplatte (22) befestigbar sind, die wiederum am Ladeboden des Kraftfahrzeugs befestigbar ist.

5. Kraftfahrzeug gemäß einem der vorhergehenden Ansprüche, **dadurch gekennzeichnet, dass** benachbarte Module miteinander befestigbar sind.

6. Kraftfahrzeug gemäß einem der vorhergehenden Ansprüche, **dadurch gekennzeichnet, dass** ein den zumindest einen Rücksitz (5) überspannendes Brückenteil (25) vorhanden ist, das eine Auflagefläche ausbildet, wobei die Auflagefläche eine im Wesentlichen identische Höhe mit den Auflageflächen der Module aufweist, so dass diese gemeinsam als Sitz- und Schlafebene dienen.

7. Kraftfahrzeug zumindest gemäß den Ansprüchen 2 und 6, **dadurch gekennzeichnet, dass**
- das Küchenmodul (6) und das Sanitärmodul (13) seitlich der Kurzseite des L-förmigen Durchgangs,
- das Kühlmodul (15) und das Brückenteil (25) seitlich der Langseite des L-förmigen Durchgangs und
- das Energiemodul (18) seitlich der Stirnseite des L-förmigen Durchgangs angeordnet sind.

8. Kraftfahrzeug gemäß einem der vorhergehenden Ansprüche, **dadurch gekennzeichnet, dass** der L-förmige Durchgang zumindest teilweise von einer Abdeckplatte (37) derart abdeckbar ist, dass diese eine Auflagefläche ausbildet, die mit den Auflageflächen der Module (6, 13, 15, 18) eine im Wesentlichen identische Höhe aufweist, wobei die Abdeckplatte (37) mittels eines Scharniers vorzugsweise zur Ausbildung einer V-Form klappbar ist und wobei die Abdeckplatte (37) vorzugsweise in V-Form auf der/den Auflagefläche(n) eines oder mehrerer Module (6, 13, 15, 18) zur Ausbildung einer Rückenstütze befestigbar ist.

9. Kraftfahrzeug gemäß einem der vorhergehenden Ansprüche, **dadurch gekennzeichnet, dass** der L-förmige Durchgang zumindest teilweise von einer Tischplatte (27) derart abdeckbar ist, dass diese eine Auflagefläche ausbildet, die mit den Auflageflächen der Module (6, 13, 15, 18) eine im Wesentlichen identische Höhe aufweist, wobei die Tischplatte (27) alternativ auf einer Tischstütze (26) lösbar befestigbar ist, wodurch die Tischplatte (27) oberhalb der Auflageflächen der Module (6, 13, 15, 18) angeordnet ist.

10. Kraftfahrzeug gemäß einem der vorhergehenden Ansprüche, **gekennzeichnet durch** einen sich zumindest über Abschnitte der Seiten und des Hecks des Kraftfahrzeugs erstreckenden Tragrahmen (40), der mit Befestigungselementen zur lösbaren Befestigung von Funktionsteilen versehen ist.
